# EUROPÄISCHE PATENTSCHRIFT

(11) **EP 1 510 408 B1**
(45) Veröffentlichungstag und Bekanntmachung des Hinweises auf die Patenterteilung: **01.04.2009**
(21) Anmeldenummer: 04016869.2
(22) Anmeldetag: 16.07.2004
(51) Int. Cl.: B60R 13/08, B32B 5/18, B32B 27/32, B32B 27/28, G10K 11/168

(54) **Verkleidung für Fahrzeugmotorhauben**
Lining for bonnets in motor-vehicles
Revêtement pour capots de véhicules automobiles

(30) Priorität: 28.08.2003 DE 10340021
(43) Veröffentlichungstag der Anmeldung: 02.03.2005
(73) Patentinhaber: BASF SE, 67056 Ludwigshafen (DE)
(72) Erfinder: Baumgartl, Horst, Dr., 55122 Mainz (DE); Meier, Egon, 67454 Hassloch (DE)

(56) Entgegenhaltungen:
- DE-A- 3 534 690
- DE-A- 19 904 986
- DE-U- 29 819 991
- US-A- 4 288 490

## Beschreibung

Die Erfindung betrifft eine energie- und schallabsorbierende Verkleidung für eine über einem Motorblock angeordnete Fahrzeugmotorhaube, wobei die Verkleidung auf der Unterseite der Fahrzeugmotorhaube anbringbar ist, und aus einer oder mehreren geschlossenzelligen Polyolefinschaumstoffschichten, und einer oder mehreren offenzelligen, elastischen Melaminharzschaumstoffschichten, aufgebaut und hydrophobiert oder oleophobiert ist.

Schaumstoffe aus Polyolefinen, insbesondere aus Polypropylen, sind bekannt und werden z.B. in den Schriften EP-A 53 333, EP-A 123 144 und DE-A 34 31 245 beschrieben. Schaumstoffe aus Melaminharz, insbesondere aus Melamin/Formaldehyd-Kondensationsprodukten, sind ebenfalls bekannt und werden beispielsweise in den Schriften EP-A 17 671, EP-A 17 672 und EP-A 37 470 beschrieben.

Bei vielen Kraftfahrzeugen ist an der Unterseite der Fahrzeugmotorhaube (auch als Fronthaube bezeichnet und nachfolgend kurz Haube genannt) eine schallabsorbierende Verkleidung angebracht, um die Motorgeräusche zu verringern. Ebenso sind "fußgängerschützende" Hauben bekannt, die bei einer Kollision des Fahrzeugs mit einem Fußgänger, Radfahrer, Inlineskater, etc. das Verletzungsrisiko des Fußgängers vermindern, beispielsweise durch sensorgesteuertes Anheben der Haube in eine Aufprallposition oder durch Haubenbereiche, die sich durch ein sensorgesteuertes Druckkammersystem aktiv verformen. Derartige Systeme sind technisch aufwändig und nur einmal benutzbar, d.h. müssen nach einer Auslösung kostenaufwändig ausgetauscht werden.

Die DE-A 197 02 995 offenbart energieabsorbierende Formkörper, beispielsweise Fahrzeugstoßfänger, die aus einer Polypropylenschaumstoffschicht und einer Polystyrolschaumstoffschicht bestehen.

Die DE-A 100 37 628 beschreibt eine energieabsorbierende Motorhaube, bei der bestimmte Haubenbereiche an ihrer Unterseite mit einem halbharten PolyurethanSchaum versehen sind. Dabei kann der Schaum angespritzt oder als Formteil befestigt sein. Andere Schäume als Polyurethanschäume werden nicht erwähnt. Ein wesentlicher Nachteil ist die mangelnde thermische Beständigkeit des Polyurethanschaumes, der durch die vom Motor erzeugte Wärme (Wärmestrahlung und erhitzte Umgebungsluft) geschädigt wird.

Aus US-A 4,288,490 sind Verkleidungen für Motorhauben bekannt, die aus einem Mehrschichtmaterial aufgebaut sind, das u.a. einen geschlossenzelligen Polyethylen-Schaumstoff umfasst, jedoch keinen Hinweis auf die Verwendung von offenzelligen Melaminharzschaumstoffen gibt. Geschlossenzellige Polyethylen-Schaumstoffe lassen u.a. in ihrer Temperatur- bzw. Ölbeständigkeit zu wünschen übrig.

Im Gebrauchsmuster DE-U 298 19 991 werden schallabsorbierende Schaumstoff-Formkörper beschrieben, die aus der Kombination eines Polyolefin-Partikelschaumstoffs und eines offenzelligen Melamin/Formaldehyd-Schaums oder Polyurethanschaums bestehen. Als Verwendungen werden allgemein Automobilteile, und als einzige spezielle Verwendung Kraftfahrzeug-Klimaanlagengehäuse, genannt. Verwendungen der Formkörper, bei denen es auf eine Energieabsorption ankommt, z.B. Fußgänger-Kollisionsschutz, werden nicht erwähnt.

Es bestand die Aufgabe, den geschilderten Nachteilen abzuhelfen. Insbesondere bestand die Aufgabe, eine Fahrzeugmotorhauben-Verkleidung bereitzustellen, die sowohl energieabsorbierende und fußgängerschützende, als auch schallabsorbierende Eigenschaften aufweist.

Außerdem sollte die Verkleidung gut temperaturbeständig sein, und insbesondere der Motorwärme über die gesamte Lebensdauer des Kraftfahrzeugs standhalten. Insbesondere sollte sich die Verkleidung durch eine Kombination der drei Eigenschaften schallabsorbierend, energieabsorbierend und temperaturbeständig auszeichnen.

Demgemäß wurde die eingangs definierte Verkleidung gefunden. Außerdem wurde eine Fahrzeugmotorhaube gefunden, an deren Unterseite eine solche energie- und schallabsorbierende Verkleidung angebracht ist. Weitere Ausgestaltungen der Erfindung sind den Unteransprüchen zu entnehmen.

Erfindungsgemäß ist die Verkleidung aus einem geschlossenzelligen Polyolefinschaumstoff, und einem offenzelligen, elastischen Melaminharzschaumstoff, aufgebaut. Als Polyolefinschaumstoff sind insbesondere solche aus Homopolymeren des Ethylens oder Propylens geeignet, oder aus Copolymeren des Ethylens oder Propylens miteinander oder mit einem oder mehreren weiteren Monomeren. Bei den Copolymeren kann es sich um statistische (random), Block- oder Impact-Copolymere handeln.

Beispielsweise kann man Polyethylen, Polypropylen, Propylen-Copolymere mit Ethylen oder weiteren Monomeren, oder Copolymere aus Ethylen, Propylen und einem oder mehreren weiteren Monomeren, verwenden. Außerdem sind auch Mischungen verschiedener Polyolefine geeignet, beispielsweise Mischungen von Polypropolylen mit Ethylen-Proplylen-Kautschuken (EP-Kautschuken).

Als vorstehend erwähnte weitere Monomere sind z.B. α-Olefine mit 3 bis 10 C-Atomen, wie But-1-en, Pent-1-en, Hex-1-en, Oct-1-en, außerdem Alkylacrylate und -methacrylate mit 1 bis 20 C-Atoman in Alkylrest, insbesondere n-, sec und tert-Butylacrylat, geeignet. Auch Diene wie Butadien, Isopren, Octadien und Dicyclopentadien sind geeignete weitere Monomere.

Bevorzugt ist der Polyolefinschaumstoff ein Polypropylenschaumstoff. Dabei sollen unter Polypropylenschaumstoff auch solche Schaumstoffe verstanden werden, die neben Propylen bis zu 50, insbesondere bis zu 15 Gew.-% weitere Monomere als Comonomere enthalten. Bevorzugt verwendet man Homo- oder Copolymere des Propylens mit bis zu 15 Gew.-% olefinischen Comonomeren, insbesondere Ethylen oder Buten. Besonders bevorzugt sind Random-Copolymere des Propylens mit 1 bis 10, insbesondere 1 bis 6 Gew.-% Ethylen.

Besonders bevorzugt weist das zur Herstellung des Polypropylenschaumstoffs eingesetzte Polypropylen einen Kristallitschmelzpunkt im Bereich von 110 bis 180°C auf. Der Kristallitschmelzpunkt ist beispielsweise als Peakmaximum im Differential Scanning Calorimetry (DSC)-Diagramm bestimmbar. Ebenfalls besonders bevorzugt beträgt der Schmelzflussindex (MFI, melt flow index) des Polypropylens 0,1 bis 100 g/10 min, ermittelt bei 230°C und 2,16 kg Belastung nach DIN 53735.

Die Polyolefine sind bekannt und können nach üblichen Verfahren erhalten werden, beispielsweise nach dem Hochdruck- (ICI), Mitteldruck- (Phillips), Niederdruck- (Ziegler), Gasphasen-, Gasphasenwirbelbett- oder Metallocen-Verfahren.

Als Polyolefinschaumstoffe verwendet man üblicherweise sog. Partikelschaumstoffe, die durch Verschweißen expandierter Polyolefinpartikel erhalten werden. Die Polyolefinpartikel können nach verschiedenen Methoden hergestellt werden, beispielsweise im sog. Extrusionsverfahren, bei dem das Polyolefin in einem Extruder aufgeschmolzen und die Schmelze mit einem flüchtigen Treibmittel vermischt wird. Die Mischung wird unter Aufschäumen extrudiert und granuliert. Beim sog. Imprägnierverfahren (siehe z.B. EP-A 53 333, EP-A 123 144 und DE-A 34 31 245), werden unvernetzte Polyolefinteilchen - beispielsweise Extrudergranulat - unter Druck in einer Mischung suspendiert, die Wasser, ein Treibmittel und zumeist einen Suspensionsstabilisator (Dispergierhilfsmittel) enthält. Man erwärmt auf die Erweichungstemperatur des Polyolefins und erhält auf diese Weise Polymerpartikel, die mit dem Treibmittel imprägniert sind. Anschließend wird die Suspension entspannt, wobei die Polyolefinteilchen expandieren. Prinzipiell kann die Imprägnierung auch in der Gasphase erfolgen, siehe z.B. DE-A 33 17 557.

Als Treibmittel kann man beispielsweise Kohlenwasserstoffe wie Butan oder Pentan, Halogenkohlenwasserstoffe wie Dichlordifluormethan, Kohlendioxid, Stickstoff, oder Alkohol/Gas-Gemische (EP-A 831 115) verwenden.

Nach beiden Methoden erhält man expandierte Polyolefinpartikel. Bevorzugt sind die Partikel im wesentlichen rund und weisen einen Durchmesser von beispielsweise 0,5 bis 20, bevorzugt 1 bis 10 mm, und eine Schüttdichte von 10 bis 300, insbesondere 40 bis 200 g/l, auf.

Die expandierten Polyolefinpartikel werden dann bei Temperaturen oberhalb des Erweichungspunktes des Polyolefins, z.B. bei 110 bis 180, insbesondere 120 bis 160 °C in einer geschlossenen Form verschweißt. Dazu wird in der Regel in einem Schäumautomat die Form mit den Partikeln gefüllt, verschlossen und danach aufgeheizt, wobei die Partikel, üblicherweise unter weiterer Expansion, miteinander verschweißen. Man erhält den gewünschten Polyolefinschaumstoff. Dabei kann die Oberfläche des Schaumstoffs je nach Ausgestaltung des Verschweißens, offen oder geschlossen sein, d.h. eine "Haut" ausbilden.

Zur Herstellung der erfindungsgemäßen Verkleidung werden bevorzugt solche Polyolefinschaumstoffe verwendet, deren Raumgewicht 15 bis 500, insbesondere 20 bis 300 kg/m³ beträgt.

Geeignete Polyolefinschaumstoffe sind im Handel erhältlich und werden beim Polypropylen auch als EPP (expandiertes Polypropylen) bezeichnet. Gut geeignet ist beispielsweise der Polypropylenschaumstoff Neopolen® von BASF.

Als Melaminharzschaumstoff sind bevorzugt solche aus einem Kondensationsprodukt aus Melamin und Formaldehyd geeignet, die auch als Melamin/Formaldehyd-Harze, MF-Harze oder Melaminharze bezeichnet werden. Solche elastischen, offenzelligen Melaminharzschaumstoffe sind bekannt und z.B. in den Schriften EP-A 17 671, 17 672, 37 470 und WO 01/94436 beschrieben.

Zur Herstellung des Melaminharzschaumes geht man aus von einem Melamin/Formaldehyd-Vorkondensat. Melamin/Formaldehyd-Kondensationsprodukte können neben Melamin bis zu 50, vorzugsweise bis 20, Gew.-% anderer Duroplastbildner, und neben Formaldehyd bis zu 50, vorzugsweise bis zu 20, Gew.-% anderer Aldehyde, einkondensiert enthalten. Besonders bevorzugt ist ein unmodifiziertes Melamin/Formaldehyd-Kondensationsprodukt. Als Duroplastbildner kommen beispielsweise in Frage: alkylund aryl-substituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

Das Molverhältnis Melamin zu Formaldehyd liegt in der Regel bei 1 : 1,3 bis 1 : 3,5, insbesondere 1 : 1,6 bis 1 : 3,1. Die Melaminharze können außerdem Sulfitgruppen einkondensiert enthalten, was beispielsweise durch Zusatz von 1 bis 20 Gew.-% Natriumhydrogensulfit bei der Kondensation des Harzes geschehen kann (siehe EP-A 37470).

Das Melamin-Formaldehyd-Vorkondensat liegt üblicherweise als Lösung oder Dispersion vor, und wird mit den üblichen, zur Herstellung eines Schaums erforderlichen Zusatzstoffen vermischt. Solche Zusatzstoffe sind insbesondere Emulgatoren (anionische, kationische oder nichtionische Tenside, z.B. Alkylsulfate) zur Emulgierung des Treibmittels und zur Stabilisierung des Schaumes, und Treibmittel (chemische oder physikalische, z.B. Pentan), um aus der Melaminharz-Lösung einen Schaum zu erzeugen, sowie Härter (meist Säuren, z.B. Ameisensäure), die die Weiterkondensation des Melaminharzes katalysieren.

Die Zusatzstoffe werden beispielsweise in einem Extruder, mit der wässrigen Lösung oder Dispersion des Melaminharzes homogen vermischt, wobei das Treibmittel ggf. auch unter Druck eingepreßt werden kann. Man kann jedoch auch von einem festen, z.B. sprühgetrockneten Melaminharz ausgehen und dieses dann mit einer wässrigen Lösung des Emulgators, dem Härter sowie dem Treibmittel vermischen. Nach dem Vermischen wird die Lösung oder Dispersion durch eine Düse ausgetragen und unmittelbar anschließend erhitzt, z.B. durch Hochfrequenzbestrahlung bei 2,45 GHz oder durch Mikrowellenbestrahlung, und dabei verschäumt. Die infolge Temperaturerhöhung und Verdampfen des Treibmittels aufschäumende Mischung wird beispielsweise zu einem Schaumstoffstrang geformt, der zu Blöcken zerschnitten wird.

Weitere Angaben zu Einsatzstoffen (Emulgatoren, Treibmittel, Härter, etc.) und weiteren Verfahrensdetails der Melaminharzschaum-Herstellung enthalten beispielsweise die bereits erwähnten Schriften WO 01/94436, EP-A 17 671, 17 672 und 37 470.

Zur Herstellung der erfindungsgemäßen Verkleidung werden bevorzugt solche Melaminharzschaumstoffe verwendet, deren Raumgewicht 5 bis 50, insbesondere 7 bis 15 kg/m³ beträgt.

Geeignete Melaminharzschaumstoffe sind im Handel erhältlich, beispielsweise als Basotect® von BASF.

Für manche Zwecke kann es günstig sein, dem Polyolefinschaumstoff und/oder dem Melaminharzschaumstoff bis zu 20 Gew.-%, vorzugsweise bis zu 10 Gew.-%, bezogen auf das ungeschäumte Polyolefin bzw. Melaminharz, Zusatzstoffe zuzusetzen. Solche Zusatzstoffe sind z.B. Farbstoffe, Pigmente, Flammschutzmittel, Antioxidantien, UVoder Wärmestabilisatoren, Mittel zur Herabsetzung der Brandgastoxizität oder zur Förderung der Verkohlung. Außerdem kann man Hydrophobierungs- oder Oleophobierungsmittel mitverwenden, siehe weiter unten. Derartige Zusatzstoffe sind dem Fachmann bekannt und handelsüblich.

Zur Herstellung der Verkleidung werden der Polyolefinschaumstoff und der Melaminharzschaumstoff in passender Weise angeordnet, beispielsweise aufeinander gelegt, und üblicherweise miteinander verbunden. Davor oder danach können die Schaumstoffe bzw. die Verkleidung erforderlichenfalls in an sich bekannter Weise auf die gewünschte Geometrie zugeschnitten werden.

In einer bevorzugten Ausführungsform ist die erfindungsgemäße Verkleidung dadurch gekennzeichnet, dass der Polyolefinschaumstoff und der Melaminharzschaumstoff als miteinander verbundene Schichten angeordnet sind. Diese Ausführungsform wird auch als Sandwichaufbau bezeichnet.

Besonders bevorzugt beträgt die Dicke der Polyolefinschaumstoff-Schicht 1 bis 10, insbesondere 1 bis 5 cm, und die Dicke der Melaminharzschaumstoff-Schicht 1 bis 5, insbesondere 1 bis 2,5 cm.

Die Verkleidung kann aus einer oder mehreren Polyolefinschaumstoff-Schichten, und/oder aus einer oder mehreren Melaminharz-Schaumstoff-Schichten, aufgebaut sein. Bei mehr als je einer Polyolefin- bzw. Melaminharzschicht beziehen sich die vorgenannten Dicken auf jede einzelne Schicht. Bevorzugt weist die Verkleidung eine einzige Schicht aus Polyolefinschaumstoff, und eine einzige Schicht aus Melaminharzschaumstoff auf, d.h. bevorzugt besteht die Verkleidung aus insgesamt zwei Schaumstoffschichten, nicht mitgerechnet die weiter unten beschriebenen Kaschierungen bzw. Deckschichten.

Die Verbindung der Schichten kann in üblicher Weise erfolgen, beispielsweise durch Verkleben. Beim Verkleben kann man dazu geeignete Kleber, z.B auf Basis von Polychlorbutadien, verwenden, oder auch die Oberfläche einer Schaumstoffschicht durch Erwärmen anschmelzen und die andere Schicht auflegen.

Die Schichten können auch durch Verpressen miteinander verbunden werden. Dazu sind z.B. Etagenpressen oder andere übliche Pressen geeignet, und es wird bei an sich bekannten Pressdrucken, -temperaturen und -dauern verpresst.

In einer bevorzugten Ausführungsform ist die Verkleidung dadurch gekennzeichnet, dass die Schichten mechanisch miteinander verbunden sind. Dies kann beispielsweise durch Vernähen, Versteppen, Tackern (Klammern), Nadeln oder Vernieten geschehen. Eine mechanische Verbindung ist auch ohne Fäden, Klammern, Nadeln, Nieten oder andere Hilfsmittel möglich, indem man die Zähelastizität der Schaumstoffe ausnutzt und die Geometrie der Schaumstoffschichten passend ausgestaltet. Beispielsweise können die Schichten bestimmte Elemente, z.B. Hinterschneidungen, Aussparungen, Laschen und/oder Zapfen aufweisen, mit denen man eine Schicht an die andere Schicht klemmt, bzw. die beim Aufeinanderdrücken der Schichten ineinander greifen und die Schichten zusammenhalten.

Die mechanische Verbindung der Schichten ohne Verkleben hat den Vorteil, dass die Schichten bei einer späteren Wiederverwertung des Fahrzeugs auf einfache Weise voneinander getrennt werden können. Außerdem fallen sie sortenrein an, d.h. ohne anhaftende Reste der jeweils anderen Schicht.

In einer weiteren, ebenfalls bevorzugten Ausführungsform ist die Verkleidung dadurch gekennzeichnet, dass eine Schicht aus Polyolefinschaumstoff der Fahrzeugmotorhaube zugewandt ist, und eine Schicht aus Melaminharzschaumstoff dem Motorblock zugewandt ist. Demnach zeigt bevorzugt die Polyolefinschicht "nach oben" zur Motorhaube, und die Melaminharzschicht "nach unten" in den Motorraum. Diese Anordnung bietet den Vorteil, dass die sehr gut temperaturbeständige Melaminharzschicht die Polyolefinschicht dauerhaft vor der Motorwärme schützt.

Zusammen mit dem ebenfalls bevorzugten Aufbau aus insgesamt zwei Schichten ergibt sich damit eine Anordnung Motorhaube/Poiyotefinschaumstoffschicht/Metaminharzschaumstoffschicht/Motorraum.

Das Ausmaß, in dem die erfindungsgemäße Verkleidung Energie bzw. Schall absorbiert, kann durch entsprechende Ausgestaltung der Verkleidung verändert werden. Beispielsweise kann man durch Art und Beschaffenheit der verwendeten Schaumstoffe, und durch die Anzahl, Abfolge und Abmessungen der Schaumstoffschichten harte oder weiche, elastische oder spröde, "laute" oder "leise" Verkleidungen herstellen.

Bevorzugt kann das Ausmaß der Energieabsorption eingestellt werden, indem man das Raumgewicht, oder die Schichtdicke, oder beide Parameter, des Polyolefinschaumstoffs variiert. In der Regel nimmt mit steigender Dicke bzw. mit zunehmendem Raumgewicht des Polyolefinschaumstoffs, die maximal absorbierbare Energiemenge zu. Allerdings nimmt mit der Dicke bzw. dem Raumgewicht des Polyolefinschaums zumeist auch die Härte des Aufpralls und damit das Verletzungsrisiko des Fußgängers zu. Demnach ist für den Einzelfall ein Optimum einzustellen, indem man Schichtdicke und/oder Raumgewicht passend wählt. Dabei sind auch die Kollisionsgeschwindigkeit, die Verformbarkeit und Blechdicke der Motorhaube, der zwischen Haube und Motorblock verfügbare Raum, etc. zu berücksichtigen.

Besonders bevorzugt wird die Verkleidung derart ausgestaltet, dass bei einer Kollisionsgeschwindigkeit v = 40 km/h der HIC den Wert von 1000 nicht überschreitet. Insbesondere werden Raumgewicht und Schichtdicke des Polyolefinschaumstoffs so gewählt, dass bei v = 40 km/h der HIC maximal 1000 beträgt. Dabei steht HIC für head injury criteria und beschreibt den Grad der Kopfverletzung des Fußgängers. HIC-Werte über 1000 gelten im allgemeinen als tödlich. Weitere Einzelheiten zu Fahrzeug-Fußgänger-Kollisionen und zum HIC-Wert sind der bereits erwähnten DE-A 100 37 628 zu entnehmen, auf die ausdrücklich verwiesen wird.

Die Vermeidungen können als solche eingesetzt werden, d.h. mit unbehandelten, insbesondere unkaschierten Oberflächen. In einer bevorzugten Ausführungsform sind eine oder mehrere Oberflächen mit Deckschichten versehen oder kaschiert, z.B. mit Textilschichten (insbesondere Vliesen oder Geweben), Metallblechen, -geweben oder -folien, Kunststoffschichten, -geweben, -vliesen oder -folien, die auch geschäumt sein können. Als Textilschichten sind Faservliese bzw. Fasergewebe auf Basis von Glasfasern, Polyesterfasern, Carbonfasern oder Aramidfasern verwendbar. Besonders bevorzugt verwendet man Textiilvliese oder Glasfaservliese.

Die Deckschicht bzw. Kaschierung kann in üblicher Weise auf die Oberfläche der Verkleidung aufgebracht werden, beispielsweise durch Verkleben mit geeigneten Klebern, durch Verpressen, und insbesondere bei Vliesen und Geweben auch durch Vernähen, Versteppen, Tackern, Nadeln oder Vernieten. Es versteht sich, dass auch mehrschichtige Kaschierungen möglich sind, z.B. durch sukzessives Aufbringen mehrerer Deckschichten auf die Verkleidung.

Aus dem Vorstehenden ergibt sich, dass bevorzugt die Verkleidung dadurch gekennzeichnet ist, dass sie einen Aufbau Polyolefinschaumstoff / Melaminharzschaumstoff /Textilvlies oder Glasfaservlies, aufweist, wobei der Polyolefinschaumstoff der Motorhaube zugewandt ist.

Erfindungsgemäß ist die Verkleidung sowohl hydrophobiert als auch oleophobiert. Dies kann beispielsweise dadurch erfolgen, dass bereits bei der Herstellung des Polyolefinschaumstoffs und/oder Melaminharzschaumstoffs ein Hydrophobierungsmittel bzw. Oleophobierungsmittel mitverwendet wird. Ebenso kann man den fertigen Schaumstoff mit dem Mittel behandeln, indem man z.B. die Schaumoberfläche mit dem Mittel benetzt oder bestreicht, oder den Schaum mit dem Mittel tränkt. Besonders bevorzugt ist der Melaminharzschaumstoff hydrophobiert und oleophobiert, und der Polyolefinschaumstoff nicht.

Bevorzugt erfolgt die Hydrophobierung und Oleophobierung dadurch, dass man eine oder mehrere Oberflächen der Verkleidung mit einer hydrophoben oder oleophoben Schicht (Gewebe oder Vlies) aus Textil oder Glasfasern kaschiert. Es können entweder hydrophobe, oder oleophobe, oder - dies ist bevorzugt - hydrophobe und oleophobe Kaschierungen übereinander, angebracht werden.

Als Textilfasern für diese kaschierenden Schichten eigen sich beispielsweise Polyester- oder Polyamidfasern. Als Hydrophobierungsmittel eignen sich z.B. Silikone, Paraffine, Silikon- und Fluortenside. Besonders geeignet sind die Handelsprodukte Dipolit®, eine Fluoralkanemulsion von Fa. Rotta; Sitren®, eine Silikonemulsion von Fa. Degussa; und Persistol®, eine Paraffinemulsion von BASF, und ähnliche Produkte.

Geeignete Oleophobierungsmittel sind beispielsweise Fluoralkanemulsionen, z.B. die Handelsprodukte Nuva® von Fa. Clariant, das bereits genannte Dipolit®, und ähnliche Produkte.

Dabei kann man mit den genannten Hydrophobierungsmitteln bzw. Oleophobierungsmitteln entweder unmittelbar den Schaumstoff behandeln, oder die Mittel bei der Herstellung der Textil- bzw. Glasfaserschichten (Kaschierungen) mitverwenden.

Besonders bevorzugt verwendet man als Kaschierungen hydrophobe und/oder oleophobe Textilvliese oder Glasfaservliese. Ganz besonders bevorzugt bringt man oleophobe und hydrophobe Textilvliese oder Glasfaservliese übereinander auf der Melaminharzschaumstoff-Schicht an, oder man verwendet ein einziges Vlies, dass hydrophob und oleophob ausgerüstet ist. Demnach ist in einer bevorzugten Ausführungsform die Verkleidung dadurch gekennzeichnet, dass die dem Motorblock zugewandte Schicht aus Melaminharzschaumstoff eine Kaschierung aus einem hydrophoben und oleophoben Textilvlies oder Glasfaservlies aufweist.

Die Verkleidung wird in üblicher Weise an der Fahrzeugmotorhaube befestigt, beispielsweise durch Kleben, Schrauben, Nieten, Klemmen, Einrasten mittels angeformter Zungen, Zapfen, Laschen o.ä.

Besonders bevorzugt erfolgt die Befestigung der Verkleidung durch Formschluss, d.h. ohne Verkleben, durch vollflächiges Anliegen (Klemmen) der Verkleidung an der Innenseite der Motorhaube, zumeist unter Verwendung von Befestigungselementen. Diese Ausführungsform hat den Vorteil, dass man die Verkleidung bei einer späteren Wiederverwertung des Fahrzeugs ohne aufwändige Werkzeuge schnell und zerstörungsfrei entfernen kann.

Gegenstand der Erfindung ist außerdem eine Fahrzeugmotorhaube, an deren Unterseite eine energie- und schallabsorbierende Verkleidung gemäß der Erfindung angebracht ist, sowie insbesondere eine Fahrzeugmotorhaube, bei der die Verkleidung durch Formschluss an der Fahrzeugmotorhaube, angebracht ist.

Die erfindungsgemäße Fahrzeugmotorhauben-Verkleidung weist sowohl energieabsorbierende und fußgängerschützende, als auch schallabsorbierende Eigenschaften auf. Sie ist gut temperaturbeständig, und hält der Motorwärme über die gesamte Lebensdauer des Kraftfahrzeugs stand. Weiterhin ermöglicht die Verkleidung insbesondere in den beschriebenen bevorzugten Ausführungsformen mit mechanisch verbundenen Schichten bzw. der Anbringung an der Haube durch Formschluss, eine einfache und sortenreine Wiederverwertung des Fahrzeugs.

## Patentansprüche

1. Energie- und schallabsorbierende Verkleidung für eine über einem Motorblock angeordnete Fahrzeugmotorhaube, wobei die Verkleidung auf der Unterseite der Fahrzeugmotorhaube anbringbar ist, und aus einer oder mehreren geschlossenzelligen Polyolefinschaumstoffschichten, und einer oder mehreren offenzelligen, elastischen Melaminharzschaumstoffschichten aufgebaut und hydrophobiert und/oder oleophobiert ist.

2. Verkleidung nach Anspruch 1, **dadurch gekennzeichnet, dass** die Melaminharzschaumstoffschicht hydrophobiert und oleophobiert ist und die Polyolefinschaumstoffschicht nicht.

3. Verkleidung nach Anspruch 1 oder 2, **dadurch gekennzeichnet, dass** der Polyolefinschaumstoff ein Polypropylenschaumstoff ist.

4. Verkleidung nach den Ansprüchen 1 bis 3, **dadurch gekennzeichnet, dass** der Polyolefinschaumstoff und der Melaminharzschaumstoff als miteinander verbundene Schichten angeordnet sind.

5. Verkleidung nach den Ansprüchen 1 bis 4, **dadurch gekennzeichnet, dass** die Schichten mechanisch miteinander verbunden sind.

6. Verkleidung nach den Ansprüchen 1 bis 5, **dadurch gekennzeichnet, dass** eine Schicht aus Polyolefinschaumstoff der Fahrzeugmotorhaube zugewandt ist, und eine Schicht aus Melaminharzschaumstoff dem Motorblock zugewandt ist.

7. Verkleidung nach den Ansprüchen 1 bis 6, **dadurch gekennzeichnet, dass** das Ausmaß der Energieabsorption eingestellt werden kann, indem man das Raumgewicht, oder die Schichtdicke, oder beide Parameter, des Polyolefinschaumstoffs variiert.

8. Verkleidung nach den Ansprüchen 1 bis 7, **dadurch gekennzeichnet, dass** die dem Motorblock zugewandte Schicht aus Melaminharzschaumstoff eine Kaschierung aus einem hydrophoben und oleophoben Textilvlies oder Glasfaservlies aufweist.

9. Verkleidung nach den Ansprüchen 1 bis 8, **dadurch gekennzeichnet, dass** sie einen Aufbau Polyolefinschaumstoff / Melaminharzschaumstoff / Textilvlies oder Glasfaservlies, aufweist, wobei der Polyolefinschaumstoff der Motorhaube zugewandt ist.

10. Fahrzeugmotorhaube, an deren Unterseite eine energie- und schallabsorbierende Verkleidung gemäß den Ansprüchen 1 bis 9 angebracht ist.

11. Fahrzeugmotorhaube nach Anspruch 10, bei der die Verkleidung durch Formschluss an der Fahrzeugmotorhaube, angebracht ist.

## Claims

1. An energy- absorbent and sound-deadening cladding for a vehicle engine hood arranged above an engine block, where the cladding can be applied to the underside of the vehicle engine hood and is composed of one or more closed-cell polyolefin foam layers and of one or more resilient, open-cell melamine-resin foam layers and has been hydrophobicized and/or oleophobicized.

2. The cladding according to claim 1, wherein the melamine-resin foam layer has been hydrophobicized and oleophobicized and the polyolefin foam layer has not.

3. The cladding according to claim 1 or 2, wherein the polyolefin foam is a polypropylene foam.

4. The cladding according to any of claims 1 to 3, wherein the polyolefin foam and the melamine-resin foam have been arranged in the form of layers bonded to one another.

5. The cladding according to any of claims 1 to 4, wherein the layers have been bonded mechanically to one another.

6. The cladding according to any of claims 1 to 5, wherein a layer composed of polyolefin foam faces toward the vehicle engine hood, and a layer composed of melamine-resin foam faces toward the engine block.

7. The cladding according to any of claims to 6, wherein the extent of energy absorption can be adjusted by varying the density, or the layer thickness, or both parameters, of the polyolefin foam.

8. The cladding according to any of claims 1 to 7, wherein a hydrophobic and oleophobic textile nonwoven or glass fiber nonwoven has been laminated to the layer which faces toward the engine block and which is composed of melamine-resin foam.

9. The cladding according to any of claims 1 to 8, whose structure comprises polyolefin foam/melamine-resin foam/textile nonwoven or glass fiber nonwoven, where the polyolefin foam faces toward the engine hood.

10. A vehicle engine hood, to the underside of which an energy-absorbent and sound-deadening cladding according to any of claims 1 to 9 has been applied.

11. The vehicle engine hood according to claims 10, in which the cladding has been applied to the vehicle engine hood by interlocking.

## Revendications

1. Revêtement absorbant l'énergie, et le son pour un capot de moteur de véhicule placé sur un bloc moteur, le revêtement étant applicable sur le côté inférieur du capot de moteur de véhicule, étant constitué d'une ou de plusieurs couches de mousse de polyoléfine à cellules fermées et d'une ou de plusieurs couches de mousse de résine mélamine élastique à cellules ouvertes et étant rendu hydrophobe et/ou oléophobe.

2. Revêtement selon la revendication 1, **caractérisé en ce que** la couche de mousse de résine mélamine est rendue hydrophobe et oléophobe et pas la couche de mousse de polyoléfine.

3. Revêtement selon la revendication 1 ou 2, **caractérisé en ce que** la mousse de polyoléfine est une mousse de polypropylène.

4. Revêtement selon les revendications 1 à 3, **caractérisé en ce que** la mousse de polyoléfine et la mousse de résine mélamine sont disposées sous la forme de couches reliées les unes aux autres.

5. Revêtement selon les revendications 1 à 4, **caractérisé en ce que** les couches sont reliées mécaniquement les unes aux autres.

6. Revêtement selon les revendications 1 à 5, **caractérise en ce qu'**une couche à base de mousse de polyoléfine est orientée vers le capot de moteur de véhicule et une couche à base de mousse de résine mélamine est orientée vers le bloc moteur.

7. Revêtement selon les revendications 1 à 6, **caractérisé en ce que** l'ampleur de l'absorption d'énergie peut être ajustée en variant la densité ou l'épaisseur de couche, 1 ou les deux paramètres, de la mousse de polyoléfine.

8. Revêtement selon les revendications 1 à 7, **caractérisé en ce que** la couche à base de mousse de résine mélamine orientée vers le bloc moteur comporte un laminage à base d'un non-tissé de fibres de verre ou d'un non-tissé textile hydrophobe et oléophobe.

9. Revêtement selon les revendications 1 à 8, **caractérisé en ce qu'**il comporte une structure mousse de polyoléfine / mousse de résine mélamine / non-tissé textile ou non-tissé de fibres de verre, la mousse de polyoléfine étant orientée vers le capot du moteur.

10. Capot de moteur de véhicule, sur le côté inférieur duquel un revêtement absorbant l'énergie et le son selon les revendications 1 à 9 est appliqué.

11. Capot de moteur de véhicule selon la revendication 10, dans lequel le revêtement est appliqué sur le capot de moteur de véhicule par solidarisation.
